(19) Europäisches Patentamt
European Patent Office
Office européen des brevets

(11) EP 3 180 581 B1

# (12) EUROPEAN PATENT SPECIFICATION

(45) Date of publication and mention
of the grant of the patent:
**23.09.2020 Bulletin 2020/39**

(51) Int Cl.:
**G01B 9/02** (2006.01)

(21) Application number: **14750232.2**

(86) International application number:
**PCT/EP2014/067219**

(22) Date of filing: **12.08.2014**

(87) International publication number:
**WO 2016/023578 (18.02.2016 Gazette 2016/07)**

## (54) INSTANTANEOUS TIME DOMAIN OPTICAL COHERENCE TOMOGRAPHY

OPTISCHE ITD-KOHÄRENZTOMOGRAFIE

TOMOGRAPHIE EN COHÉRENCE OPTIQUE À DOMAINE TEMPOREL INSTANTANÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.06.2017 Bulletin 2017/25**

(73) Proprietor: **Alcon Inc.**
**1701 Fribourg (CH)**

(72) Inventors:
• **VOGLER, Klaus**
**99444 Blankenhain (DE)**
• **MASSOW, Ole**
**29303 Bergen (DE)**
• **WISWEH, Henning**
**31234 Edemissen (DE)**

(74) Representative: **Frenkel, Matthias Alexander**
**Wuesthoff & Wuesthoff**
**Patentanwälte PartG mbB**
**Schweigerstrasse 2**
**81541 München (DE)**

(56) References cited:
US-A1- 2009 219 543     US-A1- 2009 219 543
US-A1- 2013 077 046     US-A1- 2013 077 046

• C.BONNEVILLE, F.THOMAS, M. DE MENGIN POIRIER, E. LE COARER, P. BENECH, T. GONTHIEZ, A. MORAND, O. COUTANT, E. MORINO, R. PUGET, B.: "SWIFTS: a groundbreaking integrated technology for high-performance spectroscopy and optical sensors", PROCEEDINGS OF SPIE, MOEMS AND MINIATURIZED SYSTEMS XII, vol. 8616, 13 March 2013 (2013-03-13), pages 86160M1-86160M15, XP002738285, DOI: 10.1117/12.2000451
• ETIENNE LE COARER ET AL: "Wavelength-scale stationary-wave integrated Fourier-transform spectrometry", NATURE PHOTONICS, vol. 1, no. 8, 1 August 2007 (2007-08-01), pages 473-478, XP055181717, ISSN: 1749-4885, DOI: 10.1038/nphoton.2007.138
• CHRISTOPHE BONNEVILLE ET AL: "SWIFTS: a groundbreaking integrated technology for high-performance spectroscopy and optical sensors", VISUAL COMMUNICATIONS AND IMAGE PROCESSING; 20-1-2004 - 20-1-2004; SAN JOSE,, vol. 8616, 13 March 2013 (2013-03-13), pages 86160M-1, XP002738285, DOI: 10.1117/12.2000451 ISBN: 978-1-62841-730-2
• Etienne Le Coarer ET AL: "Wavelength-scale stationary-wave integrated Fourier-transform spectrometry", Nature Photonics, vol. 1, no. 8, 1 August 2007 (2007-08-01), pages 473-478, XP055181717, ISSN: 1749-4885, DOI: 10.1038/nphoton.2007.138

**Description**

**BACKGROUND**

**Field of the Disclosure**

The present disclosure relates to spectroscopic instruments and methods, and more specifically, to instantaneous time domain optical coherence tomography (iTD-OCT) systems and methods.

**Description of the Related Art**

Optical coherence tomography (OCT) is an interferometric analysis technique for structural examination of a sample material that is at least partially reflective to light. In OCT, light is used to measure distances and depth profiles based on optical interference that arises between a reference beam and a sample beam that interacts with the sample material.

Because the sample material comprises internal interfaces or other features at which the optical refraction index changes, a portion of incident light from the sample beam is reflected back or back-scattered and can be used for interferometric detection at an OCT instrument, in superposition with the reference beam. The sample material may generally be any sample object, or portion thereof, that exhibits a degree of transparency for optical wavelengths used by an OCT instrument. OCT is to analyze sample materials that comprise relatively complex external and internal structures associated with refraction index changes. For example, the sample material for OCT analysis may comprise transparent plastics or biological tissue, among other materials.

Commercial diagnostic and clinical OCT instruments have been developed for *in vivo* imaging of biological issues, and in particular, for imaging fine structures in a human eye. Specifically, OCT instruments are used to measure geometrical and optical characteristics of different sections of the human eye. The geometric and optical characteristics provided by such OCT analyses enable biomechanical or physiological modelling of an individual eye of a patient in order to diagnose an ophthalmological health condition and to develop a suitable treatment plan. Because of the relatively great penetration depth in scattering biological tissue with the relatively high axial resolution provided by OCT as compared to other methods, as well as the ease of applying incident light on a patient, OCT is an effective functional imaging technique for various applications in ophthalmology. In particular, OCT can be used for early detection of pathogenesis of many eye diseases. For example, the cornea is well suited for measurement and analysis by OCT and OCT has been widely used to analyze various biostructures associated with the cornea.

Conventional OCT instruments operate according to different principles, each of which may be particularly limited in certain functional or commercial aspects. The operation of certain types of OCT instruments, which operate using different methods to obtain a one dimensional (1D) optical depth profile of the sample material in an axial (Z) direction with respect to an incident light beam (referred to as an 'A-scan'), is presented below in further detail. It will be understood that various types of OCT instruments may further be mechanically scanned laterally (i.e., in the X and Y directions) to obtain two dimensional (2D) and three dimensional (3D) image data.

One implementation of OCT is time domain OCT (TD-OCT), in which a broadband low coherence light source is split into a reference beam and a sample beam that are interferometrically superpositioned. In TD-OCT, an optical path length of the reference beam is modulated temporally in an axial direction, corresponding to the measurement depth of the incident light of the sample beam, in order to obtain the optical depth profile of the sample material. Accordingly, in TD-OCT, axial depth scanning is performed using a periodic movement of a reference beam deflection device (e.g., a reference beam mirror), while the intensity of the superpositioned reference-modulated beam (i.e., the interferogram) is captured using a single-channel light intensity detector (i.e., a photodetector). Thus, while having a relatively simply constructed detector, a TD-OCT instrument still operates with the reference-modulated scanning procedure, which may add cost, complexity, and result in relatively slow operation for imaging purposes.

Other implementations of OCT instruments include frequency domain OCT (FD-OCT) (also sometimes referred to as Fourier domain OCT), which includes spectral domain OCT (SD-OCT) and swept source OCT (SS-OCT). FD-OCT instruments operate based on frequency information in the interferogram that results from interaction (i.e., back-scattering) of the sample beam with physical features in the sample material at different axial depths. Thus, to obtain the optical depth profile in the axial direction (i.e., the A-scan), a Fourier transform is performed on the interferogram signal in FD-OCT. Furthermore, because modulation of the reference optical path length is omitted in FD-OCT, FD-OCT instruments having a fixed reference beam may omit moving optical parts, thereby enabling rapid collection of the A-scan with a temporally stable measurement sensitivity.

In SD-OCT, a broadband, low coherence light source is typically employed, while the detector includes a spectrometer to resolve the frequency information in the interferogram. Thus, an SD-OCT instrument can enable relatively rapid imaging, but may include a relatively expensive spectrometer with an alignment-sensitive camera device that results in relatively high costs and large physical dimensions. In SS-OCT a narrowband, high coherence light source (i.e., a tunable laser) is tuned over a desired frequency band, while a photodetector is used to acquire the interferogram over the frequency band in tandem with the source tuning. Accordingly, an SS-OCT instrument can enable relatively rapid imaging with high sensitivity and a relatively low cost detector, but may have poorer axial or lateral imaging resolution than is desired.

C. Bonneville et al.: "SWIFTS: a groundbreaking integrated technology for high-performance spectroscopy and optical sensors", Proceedings of SPIE, MOEMS and Miniaturized Systems XII, vol. 8616, DOI: 10.1117/12.2000451, discloses the principles of SWIFTS (Stationary-Wave Integrated Fourier Transform Spectrometer).

US 2013/077046 A1 discloses a scan location matching (SLM) method which identifies conventional time domain optical coherence tomography (TD-OCT) circle scan locations within three-dimensional spectral domain OCT scan volumes. A technique uses both the SLM algorithm and a mathematical retinal nerve fiber bundle distribution (RNFBD) model, which is a simplified version of the anatomical retinal axon bundle distribution pattern, to normalize TD-OCT thickness measurements for the retinal nerve fiber layer (RNFL) of an off-centered TD-OCT circle scan to a virtual location, centered on the optic nerve head. The RNFBD model eliminates scan-to-scan RNFL thickness measurement variation caused by manual placement of TD-OCT circle scan.

E. Le Coarer et al.: "Wavelength-scale stationary-wave integrated Fourier-transform spectrometry", Nature Photonics, vol. 1, no. 8, DOI: 10.1038/nphoton.2007.138, discloses a SWIFTS-based spectrometer relying on an original optical near-field detection method in which optical nanoprobes are used to sample directly the evanescent standing wave in the waveguide.

US 2009/219543 A1 discloses a spectrograph comprising a waveguide provided with accesses, a means for injecting two guided contra-propagative waves by each accesses in such a way that a spatial interference is formed in the waveguide, means for detecting the energy of the evanescent wave of the guided field produced by the interference of said contra-propagative waves.

## SUMMARY

The above-described problems of the prior art and other related problems are solved by the subject-matter according to the independent claims.

In one aspect, a disclosed method for performing time domain optical coherence tomography includes generating a sample beam and a reference beam and propagating the reference beam along a fixed optical path to an optical axis of a standing waveguide spectrometer. The method also includes propagating the sample beam to a sample. A portion of the sample beam may be back-scattered by the sample resulting in a measurement beam. The method may include propagating the measurement beam to the optical axis of the standing waveguide spectrometer, and receiving an interference signal from the standing waveguide spectrometer. The interference signal may be indicative of optical interference within the standing waveguide spectrometer between the reference beam and the measurement beam.

In certain embodiments, the method further includes processing the interference signal to generate an optical depth profile of the sample. The method may include scanning the sample to generate image data indicative of the sample. The sample beam may be directed to different lateral positions at the sample, while an optical depth profile is generated at each lateral position.

In another disclosed aspect, a measurement instrument for performing iTD-OCT includes a light source and a beam splitter to split light from the light source into a sample beam and a reference beam. The measurement instrument may include a detector comprising a standing waveguide spectrometer having an optical axis. The reference beam may propagate from the beam splitter to the optical axis of the standing waveguide spectrometer. The sample beam may propagate to a sample, while a portion of the sample beam is back-scattered by the sample resulting in a measurement beam. The measurement beam may propagate from the sample to the optical axis of the standing waveguide spectrometer. The standing waveguide spectrometer may generate an interference signal indicative of optical interference within the standing waveguide spectrometer between the reference beam and the measurement beam.

In particular embodiments, the optical interference may occur over a first width within the standing waveguide spectrometer, such that the first width linearly corresponds to a penetration depth of the sample beam within the sample. The measurement beam may include photons back-scattered by the sample within the penetration depth. The interference signal may be simultaneously generated by a plurality of detector pixels within the standing waveguide spectrometer, while the detector pixels are sensitive to the optical interference.

In some embodiments, the measurement instrument may further include a signal processing module to process the interference signal to generate an optical depth profile of the sample. An optical path length of the reference beam may remain fixed when the interference signal is processed. The measurement instrument may further include a scanning element to direct the sample beam to different lateral positions at the sample. An optical depth profile may be generated at each lateral position.

## BRIEF DESCRIPTION OF THE DRAWINGS

For a more complete understanding of the present invention and its features and advantages, reference is now made to the following description, taken in conjunction with the accompanying drawings, in which:

FIG. 1 is a prior art block diagram of a TD-OCT instrument;

FIG. 2 is a block diagram of selected elements of an embodiment of an iTD-OCT instrument;

FIG. 3 is a block diagram of selected elements of an embodiment of an iTD-OCT detector; and

FIG. 4 is a flow chart of selected elements of a method for performing iTD-OCT.

## DESCRIPTION OF PARTICULAR EMBODIMENT(S)

In the following description, details are set forth by way of example to facilitate discussion of the disclosed subject matter. It should be apparent to a person of ordinary skill in the field, however, that the disclosed embodiments are exemplary and not exhaustive of all possible embodiments.

As used herein, a hyphenated form of a reference numeral refers to a specific instance of an element and the un-hyphenated form of the reference numeral refers to the collective element. Thus, for example, device '12-1' refers to an instance of a device class, which may be referred to collectively as devices '12' and any one of which may be referred to generically as a device '12'.

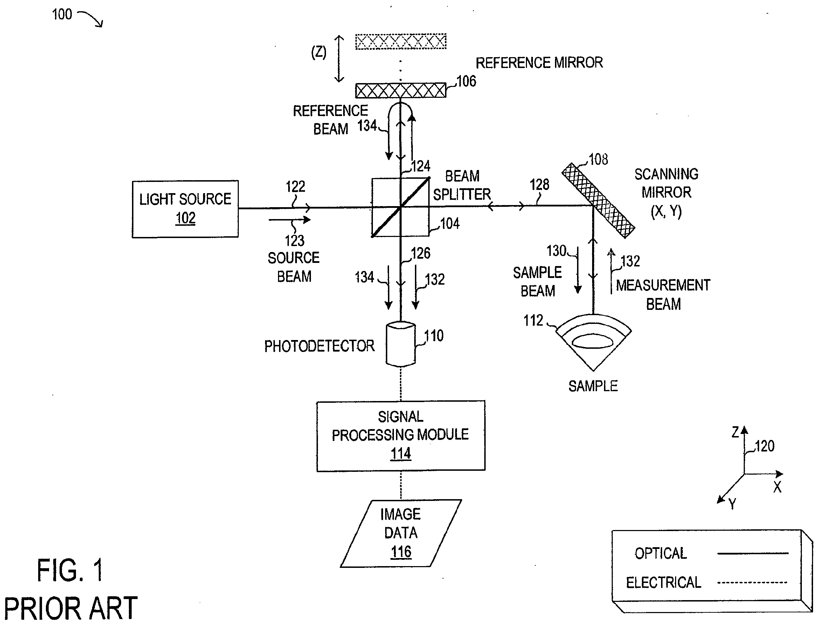

Referring now to the drawings, prior art FIG. 1 is a block diagram showing a time domain optical coherence tomography (TD-OCT) instrument 100. TD-OCT instrument 100 is not drawn to scale but is a schematic representation. As shown, TD-OCT 100 is used to analyze sample 112, which may represent a human eye, and in particular, a cornea of a human eye. Also, in TD-OCT 100, coordinate system 120 defines an axial direction in Z and lateral directions in X and Y, which are relative to sample 112 such that sample beam 130 propagates towards sample 112 in the axial direction Z.

As shown, TD-OCT 100 includes light source 102, from which a low coherence source beam 123 is generated and introduced along source optical path 122. Source beam 123 propagates along source optical path 122 towards beam splitter 104. Beam splitter 104 creates reference beam 134 that propagates along reference optical path 124 and sample beam 130 that propagates along sample optical path 128. Reference beam 134 propagates along optical path 124 from beam splitter 104 toward reference mirror 106 and then back to beam splitter 104. Sample beam 130 propagates along sample optical path 128 towards sample 112 via scanning mirror 108. Measurement beam 132 propagates along sample optical path 128 back from sample 112 also via scanning mirror 108.

From beam splitter 104, sample beam 130 propagates along sample optical path 128 and reflects off scanning mirror 108 towards sample 112. Scanning mirror 108 is tilted mechanically to enable scanning in lateral directions X and Y for 2D or 3D scanning operations on sample 112. Measurement beam 132 includes photons that are back-scattered by sample 112 and travel back along sample optical path 128 towards beam splitter 104 after reflecting off scanning mirror 108.

At beam splitter 104, reference beam 134 is superpositioned with measurement beam 132 and the superpositioned beams propagate along detection optical path 126. Detection optical path 126 propagates superpositioned reference beam 134 and measurement beam 132 towards photodetector 110. An optical path length for reference beam 134 (the total optical path length extending from beam splitter 104 to reference mirror 106 to beam splitter 104 to photodetector 110) may be modulated by mechanical displacement of reference mirror 106. This modulation corresponds to scanning sample 112 in the axial direction Z to obtain an optical depth profile (i.e., an A-scan).

Due to optical path length differences, superimposed reference beam 134 and measurement beam 132 optically interfere along detection optical path 126 propagating towards photodetector 110. Photodetector 110 may comprise a photodiode or similar device that generates an electrical signal indicative of incident light intensity at photodetector 110. As shown, photodetector 110 outputs the electrical signal to signal processing module 114, which may include corresponding circuitry for signal conditioning, demodulation, digitization, and digital signal processing. Signal processing module 114 generates image data 116, which may represent 1D, 2D, or 3D image data acquired using TD-OCT 100.

In operation, an optical path length difference between the optical path lengths for reference beam 134 and for the sum of sample beam 130 and measurement beam 132 is precisely modulated by reference mirror 106, such that an interference pattern results along detection optical path 126 and, particularly, at detector 110. Because measurement beam 132 results from back-scattering elements within sample 112, the interference pattern intensity arriving at, and sensed by, photodetector 110 for a given position of reference mirror 106 precisely corresponds to a particular analysis depth at sample 112. However, mechanical displacement of reference mirror 106 is a limiting factor in various aspects of the operation of TD-OCT 100, including limiting the overall scanning speed that is attainable by TD-OCT 100, especially for 2D and 3D imaging applications.

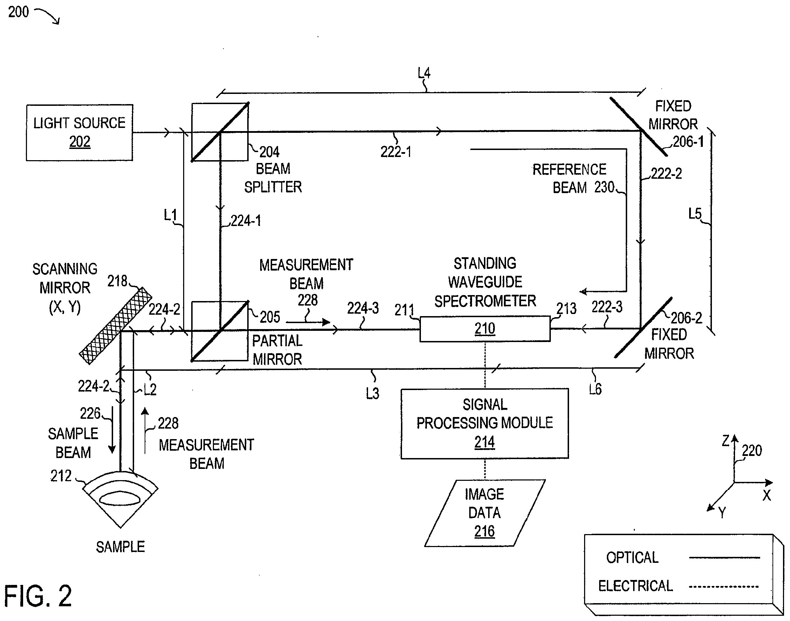

Referring now to FIG. 2, a block diagram of selected elements of an embodiment of an instantaneous time domain optical coherence tomography (iTD-OCT) instrument 200 is depicted.

As shown in FIG. 2, iTD-OCT instrument 200 is used to analyze sample 212, which may represent a human eye, and in particular, a cornea or a lens of a human eye. In iTD-OCT instrument 200, coordinate system 220 defines an axial direction in Z and lateral directions in X and Y, which are relative to sample 212 such that sample beam 226 propagates towards sample 212 in the axial direction Z. It is noted that in different embodiments, different orientations for lateral directions X and Y may be used.

In FIG. 2, iTD-OCT instrument 200 represents a type of TD-OCT instrument that enables very high speed signal acquisition of optical depth profiles (A-scans) that is not limited by mechanical modulation of a reference mirror, in contrast to TD-OCT instrument 100 discussed previously with respect to prior art FIG. 1. As shown, iTD-OCT instrument 200 enables substantially simultaneous capture and measurement of an entire A-scan using a fixed reference optical path 222 for reference beam 230, which eliminates mechanical movement of the reference mirror. The capture and acquisition of the A-scan is enabled by a spectroscopic detector that instantaneously captures interference signals for all back-scattering elements in sample 212 over the entire optical depth profile in the axial (Z) direction. As shown in FIG. 2, iTD-OCT instrument 200 includes standing waveguide spectrometer 210 for the spectroscopic detector. In other embodiments, other types of spectroscopic detectors may be used. For example, instead of standing waveguide spectrometer 210, iTD-OCT instrument 200 may be used with a scanning near-field optical microscope (SNOM) sensor array. In the SNOM sensor array, an evanescent field associated with an interference pattern may be coupled to respective ends of a series of optical fibers having a very small diameter and is sensed using an array of photodetectors.

Thus, iTD-OCT instrument 200 may represent a mechanically stabile and robust OCT instrument that remains internally calibrated and optically adjusted, similar to an SD-OCT instrument having a spectrometer. Furthermore, since iTD-OCT instrument 200 operates on the basis of time domain interference, as will be described in further detail below, post-processing with a Fourier transformation of spectral information may be omitted, which can substantially accelerate signal processing module 214 as compared to comparable signal processing modules for SD-OCT, which also simultaneously acquire an entire A-scan. Additionally, linearization of the raw sensor signal into the wavenumber (k) space, as is performed with FD-OCT, may be omitted with iTD-OCT. Still further advantages of iTD-OCT instrument 200 may be realized with miniaturization and integration of various components into a single compact solid state unit, which may further decrease costs and improve functionality as compared to other types of OCT instruments.

As shown, iTD-OCT instrument 200 in FIG. 2 includes light source 202, which is a low coherence light source. Light source 202 represents a singular light source for sample beam 226 and reference beam 230. Accordingly, optical path lengths for both sample beam 226 and reference beam 230 begin at beam splitter 204 for interference purposes. In other words, beam splitter 204 is an optical start point shared by sample beam 226 and reference beam 230.

In FIG. 2, sample beam 226 propagates along sample optical path 224-1 and 224-2 from beam splitter 204 to sample 212. Measurement beam 228 propagates along sample optical path 224-1, 224-2 and 224-3 from sample 212 to standing waveguide spectrometer 210. Sample beam 226 is redirected at scanning mirror 218 to enable scanning of sample 212 in lateral directions X and Y. This scanning does not substantially change the respective optical path lengths of photons in sample beam 226 and measurement beam 228. Thus, sample optical path 224 is a fixed path. In the exemplary arrangement depicted in FIG. 2, measurement beam 228 includes photons from sample beam 226 that are back-scattered by sample 212 and travel back along optical path 224-2 towards partial mirror 205. Measurement beam 228 propagates from partial mirror 205 to a first end 211 of standing waveguide spectrometer 210 along optical path 224-3.

As depicted in the example embodiment of FIG. 2, reference beam 230 propagates along reference optical path 222 towards a second end 213 of standing waveguide spectrometer 210. Reference optical path 222 is a fixed optical path and comprises optical paths 222-1, 222-2, and 222-3. Fixed mirror 206-1 diverts reference beam 230 from optical path 222-1 to optical path 222-2. Fixed mirror 206-2 diverts reference beam 230 from optical path 222-2 to optical path 222-3. It is noted that in other embodiments, different arrangements for reference optical path 222 may be used.

Thus, measurement beam 228 is incident at first end 211 of standing waveguide spectrometer 210 and reference beam 230 is incident at second end 213 of standing waveguide spectrometer 210. Within standing waveguide spectrometer 210, reference beam 230 and measurement beam 228 are superimposed while propagating in opposing directions in the exemplary arrangement shown in FIG. 2.

For the superimposed beams within standing waveguide spectrometer 210, the optical path length equality given by Equation 1 defines the condition when an optical path length difference between the beams is zero.

$$L_{Samp} = L_{Ref} \quad \text{Equation (1)}$$

In Equation 1, $L_{Samp}$ is the total optical path length over sample optical path 224, given by the sum of the optical path lengths for sample beam 226 and measurement beam 228. $L_{Ref}$ is the total optical path length over reference optical path 222, given by the optical path length of reference beam 230. Equation 1 may be stated in terms of the optical path lengths shown in FIG. 2, as given by Equation 2.

$$L1 + 2*L2 + L3 = L4 + L5 + L6 \qquad \text{Equation (2)}$$

In Equation 2, L1 is the optical path length of sample beam 226 propagating along optical path 224-1. L2 is the optical path length of sample beam 226 propagating along optical path 224-2. L3 is the optical path length of measurement beam 228 propagating along optical path 224-3. L4 is the optical path length of reference beam 230 propagating along optical path 222-1. L5 is the optical path length of reference beam 230 propagating along optical path 222-2. L6 is the optical path length of reference beam 230 propagating along optical path 222-3.

As shown, optical paths 224-3 and 222-3 are measured to a common termination point within standing waveguide spectrometer 210. When the common termination point is the zero point for the optical path length difference, optical interference (e.g., in the form of an interference pattern) may develop adjacent to the zero point within standing waveguide spectrometer 210. The optical path length differences causing the optical interference arise due to variations in the optical path length L3 for photons in measurement beam 228, which result from reflective features within sample 212 that are at different positions. Thus, the optical interference within standing waveguide spectrometer 210 includes distance and intensity information for the reflective features of sample 212 and is used to obtain an optical depth profile of sample 212.

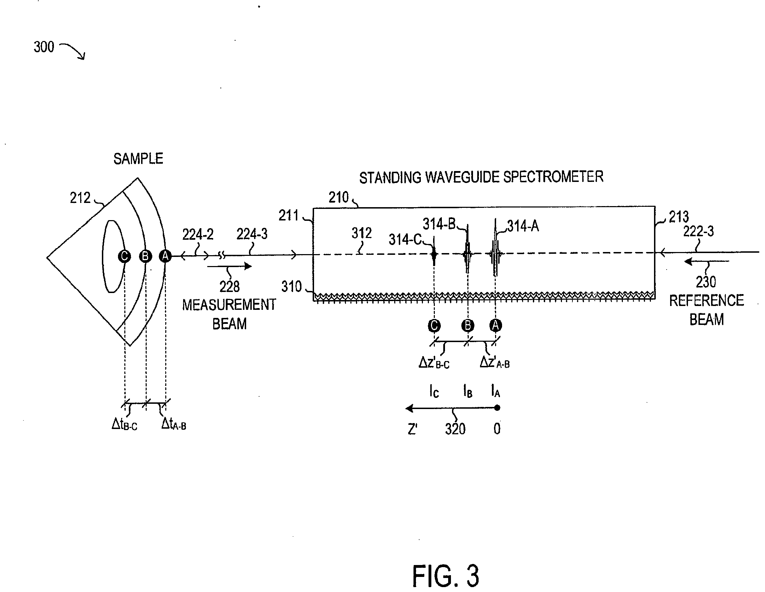

Standing waveguide spectrometer 210 is internally sensitive to the optical interference, as explained in further detail with respect to FIG. 3, and can generate an interference signal indicative of the optical interference between reference beam 230 and measurement beam 228. The interference signal is received by signal processing module 214, which processes the interference signal to generate image data 216. The processing by signal processing module 214 may include signal conditioning (e.g., amplification, filtering, windowing, etc.), demodulation, digitization, and digital signal processing. When lateral scanning in X and Y is performed with iTD-OCT instrument 200 using a scanning element, such as scanning mirror 218, a plurality of optical depth profiles may be acquired to generate a 2D image, for example, over a scanned line of sample 212. When lateral scanning is performed over a plurality of the scanned lines, iTD-OCT instrument 200 may generate a 3D image. Thus image data 216 of sample 212 may be 1D, 2D, or 3D.

As shown in FIG. 2, when signal processing module 214 includes data processing functionality, signal processing module 214 may include a processor and memory media, which store instructions (i.e., executable code) that are executable by the processor having access to the memory media. The processor may execute instructions that cause iTD-OCT instrument 200, or portions thereof, to perform the functions and operations described herein. For the purposes of this disclosure, the memory media may include non-transitory computer-readable media that stores data and instructions for at least a period of time. The memory media may comprise persistent and volatile media, fixed and removable media, and magnetic and semiconductor media. The memory media may include, without limitation, storage media such as a direct access storage device (e.g., a hard disk drive or floppy disk), a sequential access storage device (e.g., a tape disk drive), compact disk (CD), random access memory (RAM), read-only memory (ROM), CD-ROM, digital versatile disc (DVD), electrically erasable programmable read-only memory (EEPROM), flash memory, non-transitory media, and various combinations of the foregoing.

In FIG. 2, iTD-OCT instrument 200 is not drawn to scale but is a schematic representation. Modifications, additions, or omissions may be made to iTD-OCT instrument 200 without departing from the scope of the disclosure. The components and elements of iTD-OCT instrument 200, as described herein, may be integrated or separated according to particular applications. Moreover, the operations of iTD-OCT instrument 200 may be performed by more, fewer, or other components.

It is noted that, in various embodiments or arrangements of iTD-OCT instrument 200, different implementations, layouts and diversions of beams may be used. For example, certain portions of optical paths 222 and 224 may include optical fibers. In some embodiments, certain portions of optical paths 222 and 224 may include optical waveguides. Certain portions of optical paths 222 and 224 may represent optical paths within a medium, such as vacuum, free space, a gaseous environment, or the atmosphere. In given embodiments, reference beam 230 and measurement beam 228 may be coincident in the same direction at standing waveguide spectrometer 210. In another arrangement, scanning mirror 218 may be omitted and another scanning element may be used. Scanning elements that replace scanning mirror 218 may include (piezo-) deformable mirrors, micro-electro-mechanical systems (MEMS), digital micromirror devices (DMD), liquid-crystal device (LCD) actuation elements, optical objectives, or various combinations thereof. In particular embodiments, at least a portion of the optical components included with iTD-OCT instrument 200 may be miniaturized and combined into a compact unit having relatively small mass and external dimensions, such that the entire compact unit is held by an external scanning element and moved with respect to sample 212. For example, certain portions of iTD-OCT instrument 200 may be implemented using semiconductor manufacturing technology as an integrated circuit. In some embodiments, the integrated circuit may include the scanning element. Also, different orientations of coordinate system 220 may be used in certain embodiments of iTD-OCT instrument 200.

Referring now to FIG. 3, a block diagram of selected elements of an embodiment of an iTD-OCT detector 300 is depicted. As shown in FIG. 3, iTD-OCT detector 300 includes standing waveguide spectrometer 210, as described with respect to FIG. 2. In certain embodiments, standing waveguide spectrometer 210 is an instance of a stationary wave integrated Fourier transform spectrometer. As shown, standing waveguide spectrometer 210 includes optical axis 312, which represents an optical path of an internal waveguide, along which external beams are introduced at first end 211 or second end 213. As a light beam (or superposition of beams) passes along optical axis 312, nanoelements, placed at regular intervals within standing waveguide spectrometer 210, interact with an evanescent (i.e., near field) wave associated with the light beam. The localized interaction of the nanoelements with the evanescent wave is detected by certain ones of detector pixels 310, shown in FIG.3 as a linear array of pixels along optical axis 312. In this manner, detector pixels 310 are sensitive to evanescent waves generated within standing waveguide spectrometer 210. The nanoelements may be nanoparticles, such as nanodots. The detector pixels 310 register and capture minute localized optical intensity variations, including variations that arise from optical interference patterns. In various embodiments, standing waveguide spectrometer 210 may have an overall length of up to about 30mm and may have a spacing of detector pixels 310 of less than about 1 $\mu$m apart from each other.

In FIG. 3, a slightly different arrangement of iTD-OCT is depicted as compared to iTD-OCT instrument 200 in FIG. 2. For descriptive clarity in FIG. 3, the scanning mirror has been removed and optical path 224-2 does not divert a sample beam for scanning, while sample 212 is arranged normal to optical path 224-2. It is noted that the arrangement depicted in FIG. 3 may represent an embodiment of iTD-OCT instrument 200 used with an external scanning element. In iTD-OCT detector 300, reference beam 230 propagates along optical path 222-3 and is incident at second end 213 along optical axis 312. Measurement beam 228 (shown without sample beam 226 in FIG. 3 for descriptive clarity) includes back-scattered photons from sample 212 and is propagated along optical path 224-2 and optical path 224-3. At first end 211, measurement beam 228 is coincident with optical axis 312 and propagates in an opposing direction to reference beam 230.

In FIG. 3, additional details with respect to sample 212 are shown. In particular, exemplary boundary layers A, B, and C are shown, representing potential sources of back-scattering from sample 212, where photons are introduced into measurement beam 228. As shown, boundary layers A and B may schematically represent top and bottom edges of the cornea (e.g., epithelium A and endothelium B), while boundary layer C may schematically represent an anterior surface of the lens capsule. Although relatively coarse biostructure resolution is depicted in FIG. 3 for descriptive clarity, it will be understood that iTD-OCT detector 300 is suitable for resolution of fine biostructures within the human eye. For example, iTD-OCT detector 300 may be used to resolve different corneal layers, such as the tear film, the epithelium, Bowman's membrane, the stroma, Descement's membrane, and the endothelium. In various embodiments, iTD-OCT detector 300 may be used to characterize or analyze intra-corneal layer biostructures, such as fibrils or microfibrils in human corneal stroma.

In FIG. 3, because measurement beam 228 is comprised of back-scattered (i.e., reflected) photons from the incident sample beam (see FIG. 2), time delays in the reflection of photons from boundary layers B and C occur with respect to boundary layer A. Specifically, reflection from boundary layer B is delayed by $2*\Delta t_{A-B}$ with respect to boundary layer A, while reflection from boundary layer C is delayed by $2*\Delta t_{A-B} + 2*\Delta t_{B-C}$ with respect to boundary layer A, where $\Delta t_{A-B}$ corresponds to a time delay for light from boundary layer A to B, and where $\Delta t_{B-C}$ corresponds to a time delay for light from boundary layer B to C. Accordingly, measurement beam 228, to the extent that boundary layers A, B, and C back-scatter the sample beam, will include reflected photons at the respective time delays described for boundary layers B and C with respect to boundary layer A.

In FIG. 3, due to superposition of reference beam 230 with measurement beam 228, optical interference due to the optical path length differences between the reference beam photons and the measurement beam photons will occur. The optical interference will occur at precise locations along optical axis 312 that correspond to the time delays resulting from boundary layers A, B, and C. Furthermore, the optical interference will appear as interference pattern 314 that is subject to a point-spread function (PSF) that detector pixels 310 may detect. As shown, interference pattern 314-A is associated with boundary layer A, interference pattern 314-B is associated with boundary layer B, and interference pattern 314-C is associated with boundary layer C. As shown, interference patterns 314-A and 314-B are separated by distance $\Delta z'_{A-B}$ along optical axis 312, while interference patterns 314-B and 314-C are separated by distance $\Delta z'_{B-C}$ along optical axis 312. Since interference patterns 314 arise due to time domain interference, $\Delta z'_{A-B}$ may linearly correspond to $\Delta t_{A-B}$, while $\Delta z'_{B-C}$ may linearly correspond to $\Delta t_{B-C}$. The respective PSFs are registered by certain ones of detector pixels 310 as intensity values $I_A$, $I_B$, and $I_C$, respectively for interference patterns 314-A, 314-B, and 314-C. Due to the fixed position of detector pixels 310 along optical axis 312, interference patterns 314-A, 314-B, and 314-C enable measurement of $\Delta z'_{A-B}$ and $\Delta z'_{B-C}$ by identifying particular ones of detector pixels 310 that detect the PSF. In this manner, intensity values $I_A$, $I_B$, and $I_C$ along with $\Delta z'_{A-B}$ and $\Delta z'_{B-C}$ are measured and are used to generate an optical depth profile for sample 212.

In operation of iTD-OCT detector 300, as shown in FIG. 3, a zero point of axis Z' along optical axis 312, which linearly represents axis Z within sample 212, may be adjusted as desired. Although reference beam 230 remains fixed during scanning of iTD-OCT instrument 200, reference beam 230 or sample beam 226 may be calibrated to any desired zero point, for example, to enable different analysis depths. Thus, a desired zero point for axis Z' where the optical path lengths of the interfering beams are equivalent may be calibrated to be within standing waveguide spectrometer 210 or may be calibrated to be external to standing waveguide spectrometer 210. It is noted that a direction 320 of axis Z' may be reversed by reversing a propagation direction of one of reference beam 230 and measurement beam 228, with respect to standing waveguide spectrometer 210. The zero point of axis Z' may be selected based on certain dimensions of standing waveguide spectrometer 210, as desired for a particular application of iTD-OCT. Furthermore, because the temporal or spatial calibration of axis Z' is determined by a physical position of each of detector pixels 310, the calibration is inherently stable and remains constant over time.

It is noted that iTD-OCT detector 300 is not drawn to scale but is a schematic representation. Modifications, additions, or omissions may be made to iTD-OCT detector 300 without departing from the scope of the disclosure. The components and elements of iTD-OCT detector 300, as described herein, may be integrated or separated according to particular applications. Moreover, the operations of iTD-OCT detector 300 may be performed by more, fewer, or other components. For example, in particular embodiments, a plurality of standing waveguide spectrometers 210 may be used in parallel to simultaneously generate a plurality of A-scans (i.e., a line scan), thereby accelerating measurement of a 2D or 3D image.

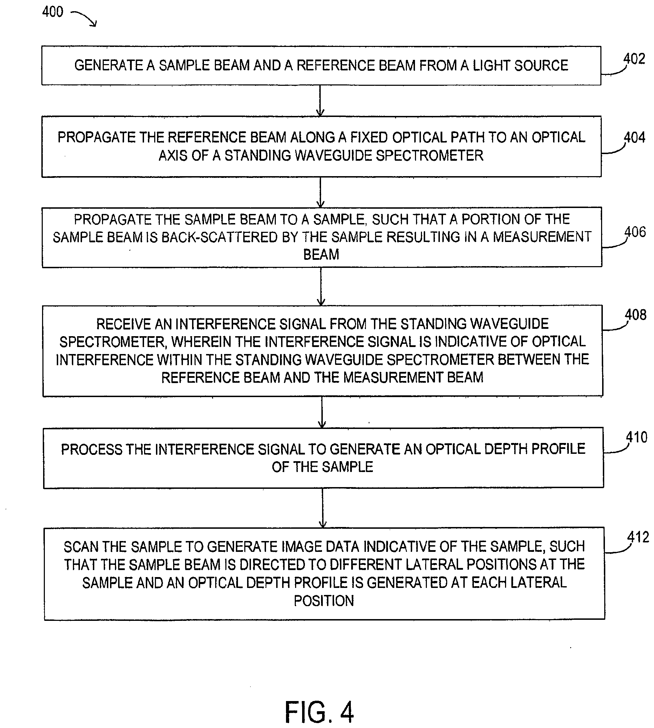

Referring now to FIG. 4, a block diagram of selected elements of an embodiment of a method 400 for performing iTD-OCT, as described herein, is depicted in flowchart form. Method 400 may be implemented by iTD-OCT instrument 200 (see FIG. 2). It is noted that certain operations described in method 400 may be optional or may be rearranged in different embodiments.

Method 400 begins at step 402 by generating a sample beam and a reference beam from a light source. The reference beam is propagated at step 404 along a fixed optical path to an optical axis of a standing waveguide spectrometer. The sample beam is propagated at step 406 to a sample, such that a portion of the sample beam is back-scattered by the sample, resulting in a measurement beam. An interference signal is received at step 408 from the standing waveguide spectrometer, wherein the interference signal is indicative of optical interference within the standing waveguide spectrometer between the reference beam and the measurement beam. The interference signal is processed at step 410 to generate an optical depth profile of the sample. The sample is scanned at step 412 to generate image data indicative of the sample, such that the sample beam is directed to different lateral positions at the sample and an optical depth profile is generated at each lateral position.

As disclosed herein, a method and system for instantaneous time domain optical coherence tomography (iTD-OCT) provides instantaneous optical depth profiles in an axial direction to a sample having scattering properties or that is at least partially reflective. An iTD-OCT instrument includes a spectroscopic detector having an internal optical axis and an array of detector pixels. A reference beam having a fixed optical path length is superpositioned along the optical axis with a measurement beam that includes back-scattered photons from the sample. The detector pixels capture a time domain interference pattern arising within the spectroscopic detector due to optical path length differences between photons from the reference beam and photons from the measurement beam. The iTD-OCT instrument may be implemented as a robust solid-state device with no moving parts.

The above disclosed subject matter is to be considered illustrative, and not restrictive, and the appended claims are intended to cover all such modifications, enhancements, and other embodiments which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description.

**Claims**

1. A method (400) for performing time domain optical coherence tomography, comprising:

   splitting light from a light source (202) by a beam splitter (204) and thereby generating (402) a sample beam (226) and a reference beam (230) sharing an optical start point;
   propagating (404) the reference beam (230) along a fixed reference optical path (222-1, 222-2, 222-3) in a forward direction only to an optical axis of a standing waveguide spectrometer (210) and to a first end (213) of the standing waveguide spectrometer (210);
   propagating (406) the sample beam (226) to a sample (212), wherein a portion of the sample beam (226) is back-scattered by the sample (212) resulting in a measurement beam (228);
   propagating the measurement beam (228) to the optical axis (312) of the standing waveguide spectrometer (210), towards a partial mirror (205), and from the partial mirror (205) to a second end (211) of the standing waveguide spectrometer (210); and

receiving (408) an interference signal from the standing waveguide spectrometer (210), wherein the interference signal is indicative of optical interference within the standing waveguide spectrometer (210) between the reference beam (230) and the measurement beam (228); and

redirecting the sample beam (226) at a scanning mirror (218) to enable scanning of the sample (212) in lateral directions,

wherein the reference beam (230) and the measurement beam (228) propagate in opposite directions along the optical axis (312) of the standing waveguide spectrometer (210).

2. The method of claim 1, wherein the optical interference occurs over a first width within the standing waveguide spectrometer (210), the first width linearly corresponding to a penetration depth of the sample beam (226) within the sample (212), wherein the measurement beam (228) includes photons back-scattered by the sample (212) within the penetration depth.

3. The method of claim 1 or 2, wherein a zero point for an optical path length difference with respect to the optical start point between photons of the reference beam (230) and photons of the measurement beam (228) is within the standing waveguide spectrometer (210).

4. The method of any of claims 1 to 3, wherein the interference signal is simultaneously generated by a plurality of detector pixels within the standing waveguide spectrometer (210), wherein the detector pixels are sensitive to the optical interference.

5. The method of any of claims 1 to 4, further comprising:
processing the interference signal to generate an optical depth profile of the sample (212).

6. The method of claim 5, wherein the scanning of the sample (212) is carried out to generate image data indicative of the sample (212), wherein the sample beam (226) is directed to different lateral positions at the sample (212), and wherein an optical depth profile is generated at each lateral position.

7. A measurement instrument (200) for performing time domain optical coherence tomography, comprising:

a beam splitter (204) to split light from a light source (202) into a sample beam (226) and a reference beam (230); and
a detector comprising a standing waveguide spectrometer (210) having an optical axis (312),
wherein the reference beam (230) propagates from the beam splitter (204) to the optical axis (312) of the standing waveguide spectrometer (210) and to a first end (213) of the standing waveguide spectrometer (210) along a fixed reference optical path (222-1, 222-2, 222-3) in a forward direction only,
wherein the sample beam (226) propagates to a sample (212) and a portion of the sample beam (226) is back-scattered by the sample (212) resulting in a measurement beam (228), the measurement beam (228) propagating from the sample (212) to the optical axis (312) of the standing waveguide spectrometer (210), towards a partial mirror (205), and from the partial mirror (205) to a second end (211) of the standing waveguide spectrometer (210),
wherein the standing waveguide spectrometer (210) generates an interference signal indicative of optical interference, the optical interference occurring within the standing waveguide spectrometer (210) between the reference beam (230) and the measurement beam (228),
wherein the measurement instrument (200) comprises a scanning element (218) configured to redirect the sample beam (226) to enable scanning of the sample (212) in lateral directions, and
wherein the reference beam (230) and the measurement beam (228) propagate in opposite directions along the optical axis (312) of the standing waveguide spectrometer (210).

8. The measurement instrument (200) of claim 7, wherein the optical interference occurs over a first width within the standing waveguide spectrometer (210), the first width linearly corresponding to a penetration depth of the sample beam (226) within the sample (212), wherein the measurement beam (228) includes photons back-scattered by the sample (212) within the penetration depth, and
wherein the interference signal is simultaneously generated by a plurality of detector pixels within the standing waveguide spectrometer (212), wherein the detector pixels are sensitive to the optical interference.

9. The measurement instrument (200) of claim 7 or 8, further comprising:

a signal processing module (214) to process the interference signal to generate an optical depth profile of the sample (212), wherein an optical path length of the reference beam (230) remains fixed when the interference signal is processed.

10. The measurement instrument (200) of claim 9, wherein the scanning element (218) is configured to direct the sample beam (226) to different lateral positions at the sample (212), wherein an optical depth profile is generated at each lateral position.

11. The measurement instrument (200) of claim 10, wherein the signal processing module (214) and the scanning element (218) are to:

generate a two dimensional image corresponding to a plurality of optical depth profiles generated over a scanned line of the sample (212); and
generate a three dimensional image corresponding to a plurality of optical depth profiles generated over a plurality of the scanned lines.

12. The measurement instrument (200) of any of claims 7 to 11, wherein the standing waveguide spectrometer (210) is sensitive to evanescent waves associated with the optical interference.

**Patentansprüche**

1. Verfahren (400) zur Durchführung von optischer Zeitdomänen-Kohärenztomografie, umfassend:

Teilen von Licht von einer Lichtquelle (202) durch einen Strahlteiler (204) und dadurch Erzeugen (402) eines Probenstrahls (226) und eines Referenzstrahls (230), die sich einen optischen Ausgangspunkt teilen;
Fortpflanzen (404) des Referenzstrahls (230) entlang eines festen optischen Referenzwegs (222-1, 222-2, 222-3) in einer Vorwärtsrichtung nur zu einer optischen Achse eines Stehwellenleiter-Spektrometers (210) und zu einem ersten Ende (213) des Stehwellenleiter-Spektrometers (210);
Fortpflanzen (406) des Probenstrahls (226) zu einer Probe (212), wobei ein Teil des Probenstrahls (226) von der Probe (212) rückgestreut wird, was zu einem Messstrahl (228) führt;
Fortpflanzen des Messstrahls (228) zur optischen Achse (312) des Stehwellenleiter-Spektrometers (210) in Richtung eines Partialspiegels (205) und vom Partialspiegel (205) zu einem zweiten Ende (211) des Stehwellenleiter-Spektrometers (210); und
Empfangen (408) eines Interferenzsignals vom Stehwellenleiter-Spektrometer (210), wobei das Interferenzsignal für eine optische Interferenz innerhalb des Stehwellenleiter-Spektrometers (210) zwischen dem Referenzstrahl (230) und dem Messstrahl (228) bezeichnend ist; und
Umleiten des Probenstrahls (226) an einem Abtastspiegel (218), um ein Abtasten der Probe (212) in lateralen Richtungen zu ermöglichen,
wobei der Referenzstrahl (230) und der Messstrahl (228) sich in entgegengesetzten Richtungen entlang der optischen Achse (312) des Stehwellenleiter-Spektrometers (210) fortpflanzen.

2. Verfahren nach Anspruch 1, wobei die optische Interferenz über eine erste Breite innerhalb des Stehwellenleiter-Spektrometers (210) auftritt, wobei die erste Breite linear einer Eindringtiefe des Probenstrahls (226) innerhalb der Probe entspricht, wobei der Messstrahl (228) Photonen umfasst, die von der Probe (212) innerhalb der Eindringtiefe rückgestreut werden.

3. Verfahren nach Anspruch 1 oder 2, wobei ein Nullpunkt für eine Differenz der optischen Weglänge in Bezug auf den optischen Ausgangspunkt zwischen Photonen des Referenzstrahls (230) und Photonen des Messstrahls (228) innerhalb des Stehwellenleiter-Spektrometers (210) ist.

4. Verfahren nach einem der Ansprüche 1 bis 3, wobei das Interferenzsignal durch eine Mehrzahl von Detektorpixel innerhalb des Stehwellenleiter-Spektrometers (210) gleichzeitig erzeugt wird, wobei die Detektorpixel für die optische Interferenz empfindlich sind.

5. Verfahren nach einem der Ansprüche 1 bis 4, ferner umfassend:
Verarbeiten des Interferenzsignals, um ein optisches Tiefenprofil der Probe (212) zu erzeugen.

**6.** Verfahren nach Anspruch 5, wobei das Abtasten der Probe (212) ausgeführt wird, um Bilddaten zu erzeugen, die für die Probe (212) bezeichnend sind, wobei der Probenstrahl (226) zu verschiedenen lateralen Positionen an der Probe (212) geleitet wird, und wobei das optische Tiefenprofil an jeder lateralen Position erzeugt wird.

**7.** Messinstrument (200) zum Durchführen von optischer Zeitdomänen-Kohärenztomografie, umfassend:

einen Strahlteiler (204) zum Teilen von Licht von einer Lichtquelle (202) in einen Probenstrahl (226) und einen Referenzstrahl (230); und

einen Detektor, der ein stehendes Wellenleiter-Spektrometer (210) mit einer optischen Achse (312) umfasst, wobei der Referenzstrahl (230) sich vom Strahlteiler (204) entlang eines festen optischen Referenzwegs (222-1, 222-2, 222-3) nur in einer Vorwärtsrichtung zur optischen Achse (312) des Stehwellenleiter-Spektrometers (210) und zu einem ersten Ende (213) des Stehwellenleiter-Spektrometers (210) fortpflanzt, wobei der Probenstrahl (226) sich zu einer Probe (212) fortpflanzt, und ein Teil des Probenstrahls (226) von der Probe (212) rückgestreut wird, was zu einem Messstrahl (228) führt, wobei der Messstrahl (228) sich von der Probe (212) zur optischen Achse (312) des Stehwellenleiter-Spektrometers (210) in Richtung eines Partialspiegels (205) und vom Partialspiegel (205) zu einem zweiten Ende (211) des Stehwellenleiter-Spektrometers (210) fortpflanzt, wobei das Stehwellenleiter-Spektrometer (210) ein Interferenzsignal erzeugt, das für eine optische Interferenz bezeichnend ist, wobei die optische Interferenz innerhalb des Stehwellenleiter-Spektrometers (210) zwischen dem Referenzstrahl (230) und dem Messstrahl (228) auftritt, wobei das Messinstrument (200) ein Abtastelement (218) umfasst, das zum Umleiten des Probenstrahls (226) konfiguriert ist, um ein Abtasten der Probe (212) in lateral Richtungen zu ermöglichen, und wobei der Referenzstrahl (230) und der Messstrahl (228) sich in entgegengesetzten Richtungen entlang der optischen Achse (312) des Stehwellenleiter-Spektrometer (210) fortpflanzen.

**8.** Messinstrument (200) nach Anspruch 7, wobei die optische Interferenz über eine erste Breite innerhalb des Stehwellenleiter-Spektrometers (210) auftritt, wobei die erste Breite linear einer Eindringtiefe des Probenstrahls (226) innerhalb der Probe (212) entspricht, wobei der Messstrahl (228) Photonen umfasst, die von der Probe (212) innerhalb der Eindringtiefe rückgestreut werden, und wobei das Interferenzsignal durch eine Mehrzahl von Detektorpixel innerhalb des Stehwellenleiter-Spektrometers (212) gleichzeitig erzeugt wird, wobei die Detektorpixel für die optische Interferenz empfindlich sind.

**9.** Messinstrument (200) nach Anspruch 7 oder 8, ferner umfassend:
ein Signalverarbeitungsmodul (214) zum Verarbeiten des Interferenzsignals, um ein optisches Tiefenprofil der Probe (212) zu erzeugen, wobei die optische Weglänge des Referenzstrahls (230) fest bleibt, wenn das Interferenzsignal verarbeitet wird.

**10.** Messinstrument (200) nach Anspruch 9, wobei das Abtastelement (218) so konfiguriert ist, dass es den Probenstahl (226) zu verschiedenen lateralen Positionen an der Probe (212) leitet, wobei ein optisches Tiefenprofil an jeder lateralen Position erzeugt wird.

**11.** Messinstrument (200) nach Anspruch 10, wobei das Signalverarbeitungsmodul (214) und das Abtastelement (218) sind zum:

Erzeugen eines zweidimensionalen Bildes, das einer Mehrzahl von optischen Tiefenprofilen entspricht, die über eine abgetastete Linie der Probe (212) erzeugt wird; und
Erzeugen eines dreidimensionalen Bildes, das einer Mehrzahl von optischen Tiefenprofilen entspricht, die über eine Mehrzahl der abgetasteten Linien erzeugt wird.

**12.** Messinstrument (200) nach einem der Ansprüche 7 bis 11, wobei das Stehwellenleiter-Spektrometer (210) für evaneszente Wellen empfindlich ist, die mit der optischen Interferenz assoziiert sind.


**Revendications**

**1.** Procédé (400) pour réaliser une tomographie en cohérence optique dans le domaine temporel, comprenant :

la séparation de la lumière provenant d'une source de lumière (202) par un séparateur de faisceau (204) et la génération (402) d'un faisceau échantillon (226) et d'un faisceau de référence (230) partageant un point de départ optique ;

la propagation (404) du faisceau de référence (230) le long d'un chemin optique de référence fixe (222-1, 222-2, 222-3) dans une direction avant uniquement vers un axe optique d'un spectromètre à guide d'onde stationnaire (210) et vers une première extrémité (213) du spectromètre à guide d'onde stationnaire (210) ;

la propagation (406) du faisceau échantillon (226) vers un échantillon (212), une partie du faisceau échantillon (226) étant rétrodiffusée par l'échantillon (212), résultant en un faisceau de mesure (228) ;

la propagation du faisceau de mesure (228) vers l'axe optique (312) du spectromètre à guide d'onde stationnaire (210), vers un miroir partiel (205), et du miroir partiel (205) vers une seconde extrémité (211) du spectromètre à guide d'onde stationnaire (210) ; et

la réception (408) d'un signal d'interférence provenant du spectromètre à guide d'ondes stationnaire (210), le signal d'interférence étant indicatif d'une interférence optique à l'intérieur du spectromètre à guide d'ondes stationnaire (210) entre le faisceau de référence (230) et le faisceau de mesure (228) ; et

la redirection du faisceau échantillon (226) au niveau d'un miroir de balayage (218) pour permettre le balayage de l'échantillon (212) dans les directions latérales,

le faisceau de référence (230) et le faisceau de mesure (228) se propageant dans des directions opposées le long de l'axe optique (312) du spectromètre à guide d'onde stationnaire (210).

2. Procédé selon la revendication 1, l'interférence optique se produisant sur une première largeur à l'intérieur du spectromètre à guide d'ondes stationnaire (210), la première largeur correspondant linéairement à une profondeur de pénétration du faisceau échantillon (226) à l'intérieur de l'échantillon (212), le faisceau de mesure (228) comprenant des photons rétrodiffusés par l'échantillon (212) à l'intérieur de la profondeur de pénétration.

3. Procédé selon la revendication 1 ou 2, un point zéro pour une différence de longueur de chemin optique par rapport au point de départ optique entre les photons du faisceau de référence (230) et les photons du faisceau de mesure (228) étant à l'intérieur du spectromètre à guide d'ondes stationnaires (210).

4. Procédé selon l'une quelconque des revendications 1 à 3, le signal d'interférence étant généré simultanément par une pluralité de pixels de détection à l'intérieur du spectromètre à guide d'ondes stationnaire (210), les pixels de détection étant sensibles à l'interférence optique.

5. Procédé selon l'une quelconque des revendications 1 à 4, comprenant en outre :
le traitement du signal d'interférence pour générer un profil de profondeur optique de l'échantillon (212).

6. Procédé selon la revendication 5, le balayage de l'échantillon (212) étant effectué pour générer des données d'image indicatives de l'échantillon (212), le faisceau échantillon (226) étant dirigé vers différentes positions latérales au niveau de l'échantillon (212), et un profil de profondeur optique étant généré au niveau de chaque position latérale.

7. Instrument de mesure (200) pour effectuer une tomographie en cohérence optique dans le domaine temporel, comprenant :

un séparateur de faisceau (204) pour séparer la lumière provenant d'une source de lumière (202) en un faisceau échantillon (226) et un faisceau de référence (230) ; et

un détecteur comprenant un spectromètre à guide d'onde stationnaire (210) ayant un axe optique (312),

le faisceau de référence (230) se propageant depuis le séparateur de faisceau (204) vers l'axe optique (312) du spectromètre à guide d'onde stationnaire (210) et vers une première extrémité (213) du spectromètre à guide d'onde stationnaire (210) le long d'un chemin optique de référence fixe (222-1, 222-2, 222-3) dans une direction avant uniquement,

le faisceau échantillon (226) se propageant vers un échantillon (212) et une partie du faisceau échantillon (226) étant rétrodiffusée par l'échantillon (212), résultant en un faisceau de mesure (228), le faisceau de mesure (228) se propageant de l'échantillon (212) vers l'axe optique (312) du spectromètre à guide d'onde stationnaire (210), vers un miroir partiel (205) et du miroir partiel (205) vers une deuxième extrémité (211) du spectromètre à guide d'onde stationnaire (210),

le spectromètre à guide d'onde stationnaire (210) générant un signal d'interférence indiquant une interférence optique, l'interférence optique se produisant à l'intérieur du spectromètre à guide d'ondes stationnaires (210) entre le faisceau de référence (230) et le faisceau de mesure (228),

l'instrument de mesure (200) comprenant un élément de balayage (218) configuré pour rediriger le faisceau échantillon (226) afin de permettre le balayage de l'échantillon (212) dans des directions latérales, et

le faisceau de référence (230) et le faisceau de mesure (228) se propageant dans des directions opposées le long de l'axe optique (312) du spectromètre à guide d'onde stationnaire (210).

8. Instrument de mesure (200) selon la revendication 7, l'interférence optique se produisant sur une première largeur à l'intérieur du spectromètre à guide d'ondes stationnaire (210), la première largeur correspondant linéairement à une profondeur de pénétration du faisceau échantillon (226) à l'intérieur de l'échantillon (212), le faisceau de mesure (228) comprenant des photons rétrodiffusés par l'échantillon (212) à l'intérieur de la profondeur de pénétration, et le signal d'interférence étant généré simultanément par une pluralité de pixels de détection à l'intérieur du spectromètre à guide d'ondes stationnaire (212), les pixels de détection étant sensibles à l'interférence optique.

9. Instrument de mesure (200) selon la revendication 7 ou 8, comprenant en outre :
un module de traitement de signal (214) pour traiter le signal d'interférence afin de générer un profil de profondeur optique de l'échantillon (212), une longueur de trajet optique du faisceau de référence (230) restant fixe lorsque le signal d'interférence est traité.

10. Instrument de mesure (200) selon la revendication 9, l'élément de balayage (218) étant configuré pour diriger le faisceau échantillon (226) vers différentes positions latérales au niveau de l'échantillon (212), un profil de profondeur optique étant généré au niveau de chaque position latérale.

11. Instrument de mesure (200) selon la revendication 10, le module de traitement de signal (214) et l'élément de balayage (218) étant configurés pour :

générer une image bidimensionnelle correspondant à une pluralité de profils de profondeur optiques générés sur une ligne balayée de l'échantillon (212) ; et
générer une image tridimensionnelle correspondant à une pluralité de profils de profondeur optique générés sur une pluralité de lignes balayées.

12. Instrument de mesure (200) selon l'une quelconque des revendications 7 à 11, le spectromètre à guide d'onde stationnaire (210) étant sensible aux ondes évanescentes associées à l'interférence optique.

FIG. 1
PRIOR ART

FIG. 2

FIG. 3

400

```
GENERATE A SAMPLE BEAM AND A REFERENCE BEAM FROM A LIGHT SOURCE          402

                                    ↓

PROPAGATE THE REFERENCE BEAM ALONG A FIXED OPTICAL PATH TO AN OPTICAL      404
AXIS OF A STANDING WAVEGUIDE SPECTROMETER

                                    ↓

PROPAGATE THE SAMPLE BEAM TO A SAMPLE, SUCH THAT A PORTION OF THE          406
SAMPLE BEAM IS BACK-SCATTERED BY THE SAMPLE RESULTING IN A MEASUREMENT
BEAM

                                    ↓

RECEIVE AN INTERFERENCE SIGNAL FROM THE STANDING WAVEGUIDE                 408
SPECTROMETER, WHEREIN THE INTERFERENCE SIGNAL IS INDICATIVE OF OPTICAL
INTERFERENCE WITHIN THE STANDING WAVEGUIDE SPECTROMETER BETWEEN THE
REFERENCE BEAM AND THE MEASUREMENT BEAM

                                    ↓

PROCESS THE INTERFERENCE SIGNAL TO GENERATE AN OPTICAL DEPTH PROFILE       410
OF THE SAMPLE

                                    ↓

SCAN THE SAMPLE TO GENERATE IMAGE DATA INDICATIVE OF THE SAMPLE, SUCH      412
THAT THE SAMPLE BEAM IS DIRECTED TO DIFFERENT LATERAL POSITIONS AT THE
SAMPLE AND AN OPTICAL DEPTH PROFILE IS GENERATED AT EACH LATERAL
POSITION
```

# FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013077046 A1

- US 2009219543 A1

**Non-patent literature cited in the description**

- **C. BONNEVILLE et al.** SWIFTS: a groundbreaking integrated technology for high-performance spectroscopy and optical sensors. *Proceedings of SPIE, MOEMS and Miniaturized Systems XII,* vol. 8616

- **E. LE COARER et al.** Wavelength-scale stationary-wave integrated Fourier-transform spectrometry. *Nature Photonics,* vol. 1 (8